# EUROPEAN PATENT APPLICATION

(11) **EP 1 643 760 A2**
(43) Date of publication of application: **05.04.2006**
(21) Application number: 05019790.4
(22) Date of filing: 12.09.2005
(51) Int. Cl.: H04N 5/74

(54) **Rear projection video device**

(30) Priority: 30.09.2004 JP 2004285791
(71) Applicant: ORION ELECTRIC CO., Ltd., Takefu-City, Fukui 915-8555 (JP)
(72) Inventor: Okada, Takeshi, Takefu-city Fukui 915-8555 (JP); Yasui, Fumiaki, Takefu-city Fukui 915-8555 (JP)
(74) Representative: Goddar, Heinz J.

(57) **Abstract**

An object of the invention is to provide a rear projection device capable of inhibiting noises generated from respective circuits from mutually affecting each other. With the rear projection device (1), an optical unit (5) is disposed substantially at the center part of a chassis frame (6) of a body cabinet (2), and an analog signal processing circuit board (13) and a power-source circuit board (12) for the light-source lamp are disposed at the left and right ends of the chassis frame (6) of the body cabinet (2), respectively, a shield case (15) being provided therebetween so as to be erect and run along a front-to-rear direction. Accordingly, the shield case (15) is disposed in a region where the analog signal processing circuit board (13) is linearly connected to the power-source circuit board (12) for the light-source lamp in such a way as to provide complete blockage therebetween, so that noises occurring to the respective circuit boards will be absorbed by the shield case (15) to thereby prevent those noises from having an effect on each other.

## Description

### FIELD OF THE INVENTION

The present invention relates to a rear projection device for projecting a video picture from the rear side of a screen.

### BACKGROUND OF THE INVENTION

A device using a CRT (Braun tube) has been in the mainstream of devices for displaying a video picture in television broadcasting, and so forth, however, to cope with the needs for an increase in screen size, higher picture quality, and lower profile of a device, there have since been developed such devices as a liquid crystal display device, a plasma display device, and a rear projection device.

For the rear projection device, there have been developed various video picture display schemes such as a scheme for using liquid crystals, a scheme for using minute mirrors corresponding to pixels, and so forth, however, any of the schemes is provided with an optical unit using a high-output light source, and a display-control system unit for executing high-resolution image processing. As advances are made in progress toward reduction in thickness of the device, and compactness thereof, those units come to be disclosed so as to be in close proximity to each other, thereby exerting an effect upon each other, so that it becomes necessary to inhibit the effect.

For example, in Patent Document 1 (JP 1992-231414A), it has been disclosed that in order to lessen respective effects of a power source and a light source, upon a drive control circuit, a power source unit, or the light source is disposed inside a case in such a way as to be spaced from the drive control circuit for controlling drive of modulation means. Further, in Patent Document 2 (JU 1994-4998B), it has been disclosed that a switching circuit portion is positioned between a noise-generating source such as a pulse transformer, and a deck body, and a screen-type tuner is disposed, thereby substituting the same for noise-shielding means.

### SUMMARY OF THE INVENTION

In the case of Patent Documents described as above, an attempt is made to inhibit the respective effects of the power source, and the light source by devising a new idea for circuit configuration, however, in the case of the rear projection device, there is the need for a countermeasure against an effect of a noise generated at a power source for a light-source lamp. As it is necessary to apply a high voltage (about 1000V) to the power source for the light source lamp, use is made of a high frequency switching power source circuit, so that a high frequency switching noise is generated from the power source circuit. The high frequency noise will come to have a significant effect upon an analog signal processing circuit for carrying out, for example, signal processing upon receiving television broadcasting, and signal processing for external input / output.

Further, in a digital signal processing circuit as well, a high frequency noise is generated, and noises are also generated from a power source circuit for supplying a power source necessary for analog signal processing, and the analog signal processing circuit, respectively

Consequently, if those circuits are disposed in close proximity to each other in order to cope with the needs for lower profile of a device, and more compactness of the device, this will cause mutual effects upon each other to increase.

Under the circumstances, it is an object of the invention to provide a rear projection device capable of inhibiting noises generated from respective circuits from mutually affecting each other.

### One embodiment of the invention will be described in detail hereinafter.

(1) The invention provide in its first aspect a rear projection device having a body cabinet comprising an analog signal processing circuit board, a shield case low in profile with a circuit board housed therein; an optical unit, a power-source circuit board for a lamp serving as a light source of the optical unit, all constituent members described being disposed on top of a bottom face of the body cabinet, wherein the analog signal processing circuit board is disposed on one end of the bottom face, on one side of the right and left sides of the optical unit, in a substantially horizontal posture; the power-source circuit board for the light-source lamp is disposed on the one end of the bottom face, on the other side of the right and left sides of the optical unit, in a substantially horizontal posture, and the shield case is provided in close proximity to the optical unit, and between the optical unit, and the analog signal processing circuit board so as to be substantially erect, running along a front-to-rear direction while being disposed in a region where the analog signal processing circuit board is linearly connected in a plan view to the power-source circuit board for the light-source lamp in such a way as to provide complete blockage therebetween.

With the load collapse prevention device according to the invention as referred to under item (1) as above, the same is a rear projection device in which the circuit board housed in the shield case is a digital signal processing circuit board.

With the load collapse prevention device according to the invention as referred to under item (1) or (2) as above, the same is a rear projection device further comprising another shield case low in profile with a circuit board housed therein, and substantially vertical in posture is disposed in such a way as to run in a direction from the left-to-the right side of the optical unit, and in close proximity to the optical unit, on the rear side thereof.

With the rear projection device having such a configuration as described above, a power-source circuit for the light-source lamp, subjected to a particularly large effect of a noise, is separated from other circuits to make up a circuit board, and in order to dispose the circuit board away as much as possible from the analog signal processing circuit board susceptible to the effect of the noise, the power-source circuit board for the light-source lamp, and the analog signal processing circuit board are disposed at respective ends of the optical unit, on the right and left sides thereof, so as to be away from each other, and therebetween, there are disposed the shield case low in profile with the circuit board housed therein, together with the optical unit, so as to be substantially erect, thereby blocking the effect of the noise.

The shield case is made of metal, and absorbs noises, having therefore a shielding effect, and further, the shield case is disposed in the region where the analog signal processing circuit board is linearly connected in a plan view to the power-source circuit board for the light-source lamp in such a way as to provide complete blockage therebetween, so that it is possible to further enhance the shielding effect for a high frequency noise having high rectilinear propagation characteristics. In addition, a noise generated at the circuit board housed in the shield case is prevented from leaking to outside thereof, and it is possible to inhibit the effects of respective noises generated inside and outside of the shield case from affecting other constituent members.

In particular, by housing the digital signal processing circuit boards in the shield case, the high frequency noise generated from the digital signal processing circuit boards can be prevented from affecting other circuits (for example, the analog signal processing circuit board) while noises from outside can be prevented from making ingress into the shield case. Further, by disposing another shield case low in profile with a circuit board housed therein, and substantially vertical in posture in such a way as to run in a direction from the left-to-the right side of the optical unit, and in close proximity to the optical unit, on the rear side thereof, the shield cases substantially vertical in posture are disposed so as to surround the optical unit, thereby enabling the effects of the respective noises from the optical unit and the power-source circuit board for the light-source lamp, and heat generated therefrom to be inhibited from affecting other circuits.

### BRIEF DESCRIPTION OF THE DRAWINGS

Fig. 1 is an overall perspective view broadly showing one embodiment of the invention;
Fig. 2 is a sectional view taken on line A - A in Fig. 1;
Fig. 3 is a sectional view taken on line B - B in Fig. 2;
Fig. 4A is a perspective view of the shield case with a digital signal processing circuit board housed therein; and
Fig. 4B is an assembly view of the shield case.

### PREFERRED EMBODIMENTS OF THE INVENTION

One embodiment of the invention will be described in detail hereinafter. As the embodiment described hereinafter represents a preferred specific example in carrying out the invention, it is to be understood that the invention is not limited thereto unless otherwise explicitly described hereinafter although various technical limitations are made in the invention.

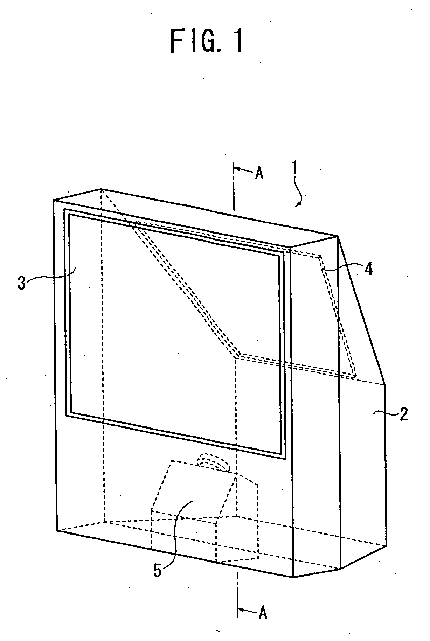

Fig. 1 is an overall perspective view broadly showing the embodiment of the invention. With a rear projection device 1 according to the embodiment, a screen 3 is attached to the front face of a body cabinet 2, and a reflecting mirror 4 is attached to the rear inner face of the body cabinet 2 in such a way as to be tilted toward the screen 3. Further, an optical unit 5 is disposed on top of a bottom face of the body cabinet 2. A video picture projected from the optical unit 5 is reflected by the reflecting mirror 4 onto the screen 3, whereupon the video picture is projected to the rear face of the screen 3 to be thereby displayed on the front face side of the screen 3.

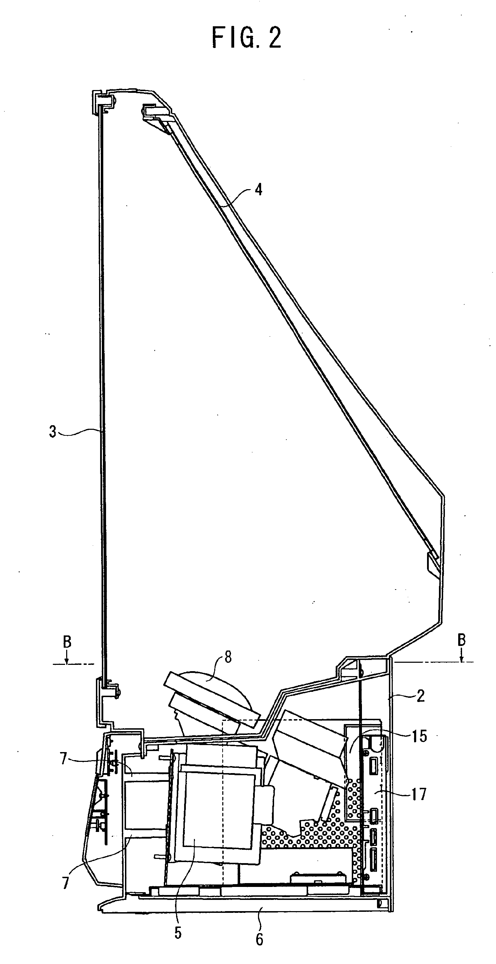

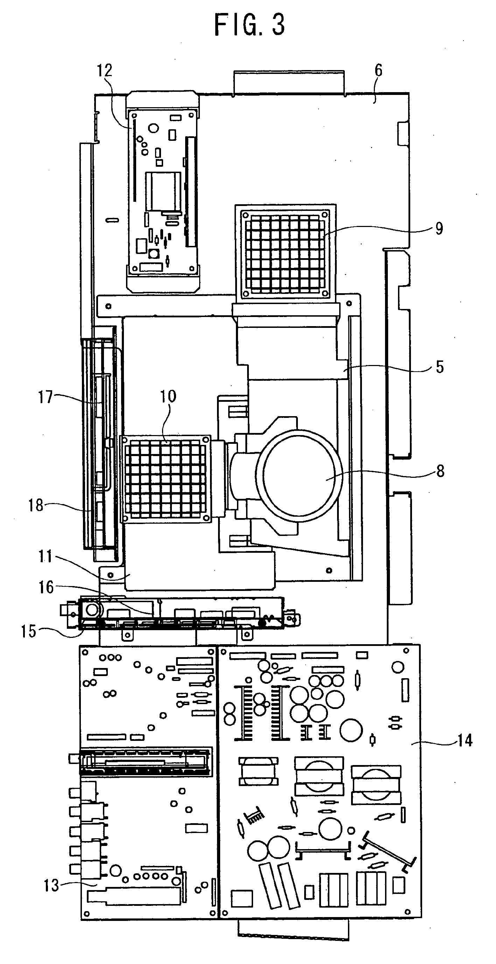

Fig. 2 is a sectional view taken on line A - A in Fig. 1, as seen from the right side in Fig. 1, and Fig. 3 is a sectional view taken on line B - B in Fig. 2, as seen from above in Fig. 2. The optical unit 5 is disposed on a chassis frame 6 made of metal, making up the bottom face of the body cabinet 2, and the front face of the optical unit 5 is securely attached to supports 7 provided so as to be protruded from the inner front face of the body cabinet 2. A lamp (not shown) serving as a light source is provided inside the optical unit 5, and light emitted from the lamp is divided into light components corresponding to three primary colors, red, green and blue, by use of a dichroic mirror to be thereby turned into images by liquid crystal panel cells corresponding to the respective colors, followed by synthesis of the images by a prism, whereupon a video picture is sent out from a projection lens 8. The optical unit as described is a public known one.

As shown in Fig. 3, the optical unit 5 is disposed substantially at the center part of the chassis frame 6 of the body cabinet 2, a fan 9 is installed on the right side of (in Fig. 3, above) the optical unit 5, and on the rear side (in Fig. 3, on the left side) thereof, there are installed a fan 10, and a driver circuit board 11. The fan 9 is for use in cooling a part where optical treatment of the three primary colors is applied, and the fan 10 is disposed above an enclosure for the lamp serving as the light source such that the enclosure is exhausted of heat through a duct (not shown).

Further, a power-source circuit board 12 for the light-source lamp, for providing a power-source to the lamp of the optical unit 5 is disposed on the rear end of the chassis frame 6, in a right side part thereof, in a substantially horizontal posture, to be secured to the chassis frame 6. The power-source circuit board 12 for the light-source lamp is provided with a power-source transformer, and a ballast circuit, and supplies power at a high voltage (about 1000 V) to the optical unit 5.

On the rear end of the chassis frame 6, in a left side part thereof (a lower part thereof, in Fig. 3), there is disposed an analog signal processing circuit board 13 provided with an external input / output terminal. The analog signal processing circuit board 13 has functions concerning input / output of video picture signals and sound signals, including an analog tuner, a digital video picture interface (HDMI), an external input unit, a switching unit, and a sound processor.

On the front end of the chassis frame 6, in a left side part thereof, there is disposed a power-source circuit board 14 having power-source circuits such as a switching transformer for a ballast power-source, a switching transformer for a power-source of a signal system, a switching transformer for microcomputer standby, and so forth, supplying power to the respective circuits.

In close proximity to a side face of the optical unit 5, on the left side thereof, there is disposed a digital signal processing circuit board 16 housed in a shield case 15 so as to be substantially vertical in posture. Electronic components making up a digital tuner are mounted on the digital signal processing circuit board 16.

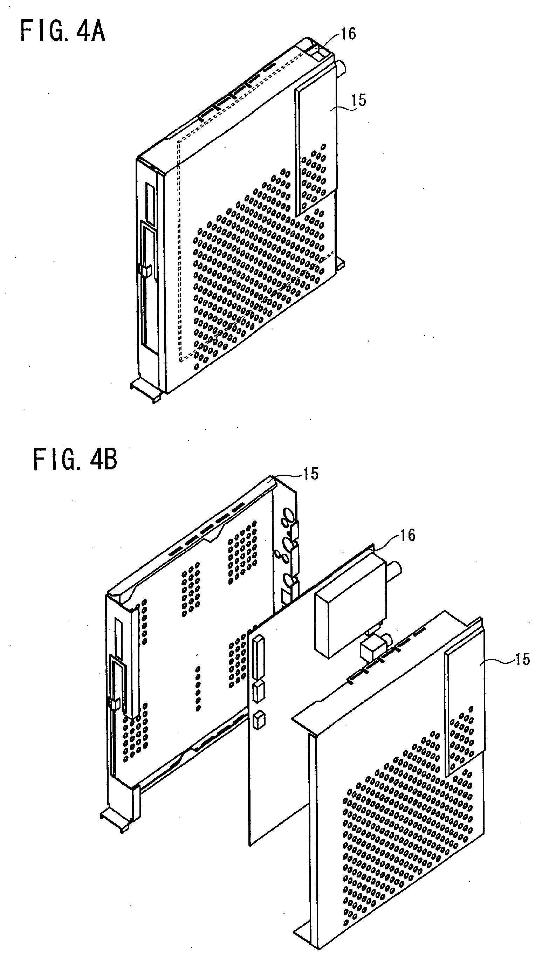

Fig. 4A is a perspective view of the shield case 15 with the digital signal processing circuit board 16 housed therein, and Fig. 4B is an assembly view thereof. The shield case 15 is made of metal, and is formed in the shape of a cabinet small in thickness, separable in two parts. Further, numerous pores are bored across the surface thereof to thereby enhance a heat release effect. A screw hole is provided in a side part of the shield case 15, on the rear side thereof, and the side part of the shield case 15, on the rear side thereof, is in intimate contact with the inner rear face of the body cabinet 2 to be thereby secured thereto with a screw. Further, a mounting lug is formed in a bottom part of the shield case 15, and the shield case 15 is secured to the chassis frame 6 by inserting the mounting lug therein. The digital signal processing circuit board 16 is securely attached to one of the two parts of the shield case 15 with a screw to be thereby housed therein.

Another digital signal processing circuit board 18 housed in a shield case 17 substantially vertical in posture is disposed in close proximity to a side face of the optical unit 5, on the rear side thereof. Circuits for screen display control, such as an I / P scaling unit, a sub-screen I / P unit, and an A / D unit, are mounted on the digital signal processing circuit board 18. As with the shield case 15, the shield case 17 also is made of metal, and is formed in the shape small in thickness, so as be separable in two parts, and further, numerous pores also are bored across the surface thereof to thereby enhance a heat release effect. A support piece extending upward is formed in an upper part of the shield case 17, and the support piece is securely attached to a mount formed on the rear face of the body cabinet 2 with a screw. Further, a mounting lug is formed in a bottom part of the shield case 17, and the mounting lug is secured to the chassis frame 6 with a screw. The digital signal processing circuit board 18 is securely attached to one of two divided parts of the shield case 17 with a screw to be thereby housed therein.

The analog signal processing circuit board 13 and the power-source circuit board 12 for the light-source lamp are disposed at left and right ends of the chassis frame 6 of the body cabinet 2, on the rear side thereof, respectively, and the shield case 15 is provided therebetween so as to be erect and run along a front-to-rear direction. Accordingly, the shield case 15 is disposed in a region where the analog signal processing circuit board 13 is linearly connected to the power-source circuit board 12 for the light-source lamp in such a way as to provide complete blockage therebetween, so that noises occurring to the respective circuit boards will be absorbed by the shield case 15 to thereby prevent those noises from having an effect on each other. Although the power-source circuit board 12 for the light-source lamp, in particular, generates a high frequency (in the range of 70 to 80 kHz) switching noise, it is possible to inhibit the effect of the high frequency noise by disposing the shield case in the region where the two circuit boards are linearly interconnected in a plan view because the high frequency switching noise has high rectilinear propagation characteristics.

Still further, since the digital signal processing circuit boards 16, 18 are housed in the shield cases, respectively, noises generated therefrom, respectively, will have no effect on outside thereof, and those circuit boards will not be subjected to the effects of noises from the outside, so that there is no particular need for causing the analog signal processing circuit board 13, the power-source circuit board 14, and the power-source circuit board 12 for the light-source lamp to be housed in shield cases, respectively, to which extent there will be a decrease in burden on cost, and required space, thereby contributing to further compactness of the device.

Yet further, since the shield cases 15, 17 are disposed in close proximity to the side face of the optical unit 5, on the left side thereof, and to the side face of the optical unit 5, on the rear side thereof, respectively, this will act so as to inhibit the effects of the noises, and to enhance the effect of heat release from the optical unit 5, further enabling a highly compact disposition configuration to be implemented.

In addition, since the chassis frame 6 making up the bottom face of the body cabinet 2 is made up of a thin metal sheet, it is possible to inhibit adverse effects of various noises generated at the main body of the device by causing the various circuit boards to be grounded directly to the chassis frame 6.

Furthermore, with the embodiment described hereinbefore, the analog signal processing circuit board 13 is separated from the power-source circuit board 14, however, those two circuit boards may be formed integrally with each other.

## Claims

1. A rear projection device (1) having a body cabinet (2), comprising:
an analog signal processing circuit board (13);
a shield case (15) low in profile with a circuit board housed therein;
an optical unit (5);
a power-source circuit board (12) for a lamp serving as a light source of the optical unit (5); all constituent members described being disposed on top of a bottom face of the body cabinet (2);
wherein the analog signal processing circuit board (13) is disposed on one end of the bottom face, on one side of the right and left sides of the optical unit (5), in a substantially horizontal posture;
the power-source circuit board (12) for the light-source lamp is disposed on the one end of the bottom face, on the other side of the right and left sides of the optical unit (5), in a substantially horizontal posture; and
the shield case (15) is provided in close proximity to the optical unit (5), and between the optical unit (5), and the analog signal processing circuit board (13) so as to be substantially erect, running along a front-to-rear direction while being disposed in a region where the analog signal processing circuit board (13) is linearly connected in a plan view to the power-source circuit board (12) for the light-source lamp in such a way as to provide complete blockage therebetween.

2. A rear projection device (1) according to claim 1, wherein the circuit board housed in the shield case (15) is a digital signal processing circuit board (16).

3. A rear projection device (1) according to claim 1 or 2, further comprising another shield case (17) low in profile with a circuit board housed therein, and substantially vertical in posture is disposed in such a way as to run in a direction from the left-to-the right side of the optical unit (5), and in close proximity to the optical unit (5), on the rear side thereof.
